# EUROPÄISCHE PATENTSCHRIFT

(11) **EP 0 801 544 B1**
(45) Veröffentlichungstag und Bekanntmachung des Hinweises auf die Patenterteilung: **09.12.1998**
(21) Anmeldenummer: 96932419.3
(22) Anmeldetag: 11.10.1996
(51) Int. Cl.: A61C 8/00

(54) **VERBINDUNGSANORDNUNG ZWISCHEN EINEM IMPLANTAT UND EINEM ABUTMENT**
CONNECTOR BETWEEN AN IMPLANT AND AN ABUTMENT
DISPOSITIF DE LIAISON ENTRE UN IMPLANT ET UN PILIER

(30) Priorität: 13.10.1995 CH 2909/95; 19.08.1996 CH 2039/96
(43) Veröffentlichungstag der Anmeldung: 22.10.1997
(73) Patentinhaber: INSTITUT STRAUMANN AG, 4437 Waldenburg (CH)
(72) Erfinder: SUTTER, Franz, CH-4435 Niederdorf (CH); GRANDE, Vincenzo, CH-4313 Möhlin (CH); TSCHIRKY, Roger, CH-4107 Ettingen (CH)
(74) Vertreter: Braun, André
(86) Internationale Anmeldenummer: CH9600358
(87) Internationale Veröffentlichungsnummer: WO9714371

(56) Entgegenhaltungen:
- DE-U- 9 417 182
- US-A- 4 246 811
- US-A- 5 116 225
- US-A- 5 302 126
- US-A- 5 334 024
- US-A- 5 368 483

## Beschreibung

### Anwendungsgebiet der Erfindung

Die vorliegende Erfindung betrifft eine Verbindungsanordnung zum Fixieren eines Abutment in einem in humanen Knochen einsetzbaren Dentalimplantat. Oben am Implantatkopf mündet eine sich axial, abwärts erstreckende Aufnahmebohrung, die aufsteigend konisch erweitert ist und in der die untere, ebenfalls konische Wurzelpartie des Abutment sitzt. In der Aufnahmebohrung kann zur Rotationssicherung des Abutment eine nichtrotatiossymmetrische Aufnahmekontur vorgesehen sein. Vom Boden der Aufnahmebohrung erstreckt sich eine koaxiale Innengewindebohrung. Komplementär zur möglichen Aufnahmekontur im Implantat kann die Wurzelpartie des Abutment eine nichtrotationssymmetrische Aussenkontur aufweisen.

Derartige Verbindungsanordnungen werden bei der Verwendung eines geraden oder eines abgewinkelten Abutment benutzt, das mittels einer Klemmschraube auf dem Implantat sowohl axial, als auch gegen Rotation gesichert ist. Die Klemmschraube wird in das Abutment eingeführt, so dass sich der Kopf der Klemmschraube im Abutment abstützt, während der Gewindeschaft der Klemmschraube unten aus dem Abutment herausragt und in das axiale Innengewinde im Implantatkopf eingreift. Für das Anziehen und Lösen der Klemmschraube ist ein in das Innere des Abutment einführbare Spezialschraubendreher vorgesehen, der speziell beim Einsatz von abgewinkelten Abutments Anwendung findet, aber auch für gerade Abutments geeignet ist. Das Abutment ist in jeder beliebigen Drehstellung fixierbar, wobei mögliche nichtrotationssymmetrische Konturen am Implantat bzw. am Abutment die wählbaren Drehpositionen entsprechend der Gestaltung der Kontur der Vielkante limitiert.

### Stand der Technik

In der einfachsten Form weist ein gerades, konisches Abutment zuunterst einen Gewindezapfen auf, der in die im Implantat vorhandene Innengewindebohrung eingedreht wird. Die konische Wurzelpartie des Abutment sitzt dann in der konischen Aufnahmebohrung und das Kopfteil des Abutment überragt die Implantatschulter. Hier bedarf es keiner separaten Klemmschraube (vgl. SCHROEDER/SUTTER/BUSER/KREKELER: Orale Implantatologie. Georg Thieme Verlag Stuttgart, 2. Aufl. 1994, S. 122).

### Figuren 1A bis 1D

Bei Verwendung eines abgewinkelten Abutment beruht die Verbindung mit dem Implantat **1** bisher darauf, dass im Abutment eine seitliche Bohrung vorgesehen ist, die sich vertikal zum Sitz des Kopfes der Klemmschraube hin erstreckt und durch welche man so mit dem Schraubendreher zur Klemmschraube gelangt. Der Kopf der Klemmschraube ist über eine seitliche Öffnung in den im Abutment vorhandenen Sitz einführbar.

Eine derartige Verbindungsanordnung lässt sich durch die seitliche Bohrung und die seitliche Öffnung zwar relativ praktisch montieren und verschrauben; infolge der zwei aneinander grenzenden Materialaussparungen entsteht jedoch eine Schwachstelle in der Wandung des Abutment. Beim Einsatz der Verbindungsanordnung an einer stets stark belasteten Position im Mund des Patienten könnte es nach längerer Zeit zu einer Materialermüdung und folglich zu einem Bruch an dieser Schwachstelle kommen. Ausserdem muss die seitliche Bohrung in Vorbereitung der Abdrucknahme provisorisch verschlossen und anschliessend wieder geöffnet werden. Dies verursacht zusätzlichen Arbeitsaufwand.

Die zuvor erwähnten Implantate **1** sind an sich bekannt (vgl. SCHROEDER/SUTTER/BUSER/KREKELER, a.a.O.). Ein solches Implantat **1** besitzt oben den Implantatkopf **10** und unten die Schaftpartie **20**, wobei der Implantatkopf **10** mit der radial umlaufenden Implantatschulter **11** zuoberst abschliesst und an der Schaftpartie **20** je nach Implantattyp ein Aussengewinde **23** vorhanden sein kann. Die Implantatschulter **11** umgibt die Mündung der sich axial abwärts konisch verengenden Aufnahmebohrung **12**, wodurch der Innenkonus **14** entsteht. Am Bohrungsgrund **13** geht die Aufnahmebohrung **12** in eine koaxiale, im Durchmesser reduzierte Gewindebohrung **21** über, die sich bis in die Schaftpartie **20** hinein erstreckt. Die Innengewindebohrung **21** weist das Innengewinde **22** auf.

Bei den vorgenannten Verbindungen aus Implantat und Abutment stellt sich ferner das Problem der Rotationssicherung des in das Implantat eingesetzten Abutment sowie der Höhentoleranz des die Implantatschulter überragenden Kopfteils des Abutment. Je nach Einsetztiefe des Abutment addiert sich zu der Längentoleranz des Abutment eine Positionstoleranz, so dass das Kopfteil des Abutment die Implantatschulter mehr oder weniger überragt. Die sich insgesamt ergebende Höhentoleranz erfordert bei der Fertigung der implantologischen Teile eine hohe, aufwendige Präzision und verursacht dennoch beim weiteren Prozedere - d.h. bei der Abdrucknahme, bei der Anfertigung des Meistermodells und bei der Erstellung der künstlichen Zahnkrone - einen hohen Aufwand, wobei letztlich immer noch störende Toleranzen auftreten.

Zur Überwindung der insoweit noch bestehenden Nachteile wurden verschiedene konstruktive Lösungen vorgeschlagen. Die Rotationssicherung des in das Implantat einsetzbaren bzw. auf das Implantat aufsetzbaren Abutment hat man dadurch gewährleistet, dass zuunterst an den Abutments eine nichtrotationssymmetrische Kontur vorgesehen ist, die mit einer am Implantatkopf vorhandenen komplementären Kontur in Eingriff kommt. Zumeist besitzen die Implantatköpfe eine innere Aufnahmekontur, während die Abutments eine in die Aufnahmekontur einsetzbare äussere Gegenkontur aufweisen (vgl. US 4 713 003, 5 000 686, 5 022 860, 5 030 095, 5 195 892 und 5 281 140 sowie EP 0 504 119). Als Beispiel für die Umkehrung des Formschlusses mit einem Implantatkopf, an welchem sich eine äussere Kontur befindet, die komplementär zu einer am Abutment angeordneten inneren Kontur ist, sei die JP 95-28877 B2 genannt. Sämtliche vorstehend erwähnten Implantate sind jedoch nicht vom Typ mit einer konischen, axialen Aufnahmebohrung; allenfalls die Implantatschulter besitzt eine konische Geometrie.

Aus der CA 1 313 597 ist eine mehrteilige Implantatanordnung mit einem Implantat, einem darauf aufsetzbaren Zwischenstück sowie mit einem durch das Zwischenstück in das Implantat einschraubbaren Abutment bekannt. Im Implantatkopf ist eine Innengewindebohrung vorgesehen, und das Zwischenstück besitzt eine konische Durchgangsbohrung, in welche die konische Wurzelpartie des Abutment einsetzbar ist. Am Implantatkopf sowie am Zwischenstück sind zueinander komplementäre, rotationssichernde Konturen vorgesehen. Auch hier besitzt das Implantat keine konische, sich axial erstreckende Aufnahmebohrung. Das Abutment selbst ist nur beschränkt durch das in den Implantatkopf einzuschraubende Gewindestuck rotationsgesichert.

In der US-A-5 302 126 wird eine Verbindungsanordnung zwischen einem Implantat und einem abgewinkelten Abutment offenbart. Für den Durchtritt einer von okklusal einsetzbaren Klemmschraube besitzt das Abutment eine Durchgangsbohrung, so dass der Gewindeabschnitt an der Klemmschraube in den Implantatkopf eingreift. Am Implantat ist zuoberst eine konisch umlaufende Schulter vorgesehen, zu welcher die untere Partie des Abutment komplementär gestaltet ist. Zur Rotationssicherung des auf das Implantat aufgesetzten Abutment, besitzt letzteres axial herausragende Stifte, die zum Einstecken in Sacklochbohrungen im Implantatkopf bestimmt sind. Eine Vielzahl von Sacklochbohrungen erlaubt mehrere Drehstellungen des Abutment zu wählen. Diese Verbindungsanordnung erlaubt einerseits nur stufenweise Drehstellungen und andererseits sind die Teile relativ kompliziert.

Von WISKOTT, H.W.A. / BELSER, U.C.: Mechanical resistance of cemented post and core buildups for ITI-Bonefit implants. Clinical Oral Implantology Research, 1992, H.3, S. 128ff, wird ein Implantat mit einen Innenvielkant am Innenkonus vorgeschlagen. Der Innenvielkant ist direkt am Übergang zum Innengewinde vorgesehen. Das zugehörige Abutment besitzt einen unten sich an die Wurzelpartie anschliessenden und zum Innenvielkant komplementären Aussenvielkant, von dem sich weiter abwärts ein Verankerungsstift erstreckt. Das Abutment wird in das Implantat eingesetzt, so dass der Aussenvielkant des ersteren formschlüssig im Innenvielkant des Implantats sitzt. Zur axialen Fixierung des Abutment im Implantat zementiert man den in das Innengewinde des Implantats hineinragenden Verankerungsstift ein. Diese Lösung ist somit auf das Einzementieren oder Einkleben eines Verankerungsstifts im Innengewinde des Implantats beschränkt.

Aus der WO-A-94 09717 ist eine weitgehend ähnliche Gestaltung hinsichtlich des Innenvielkants im Implantat und des Aussenvielkants am Abutment bekannt. Der Innenvielkant befindet sich wiederum am Übergang zum Innengewinde; korrespondierend dazu ist der Aussenvielkant am Abutment beschaffen.

### Aufgabe der Erfindung

In Anbetracht der nicht völlig befriedigenden Funktionssicherheit der bis dato bekannten Verbindungsanordnungen, was auf konstruktive Merkmale zurückzuführen ist, liegt der Erfindung das folgende Problem zugrunde. Zu schaffen ist eine Verbindungsanordnung zwischen einem Implantat und einem geraden oder abgewinkelten Abutment, welche eine höchst zuverlässige Festigkeit besitzt. Ferner muss das Abutment sicher und praktikabel auf dem Implantat fixierbar sein und darf sich auch infolge von Mikrobewegungen nicht lösen. Überdies soll die Verbindungsanordnung aus möglichst wenigen, einfachen Teilen bestehen und sich somit preisgünstig herstellen lassen. Schliesslich ist es wünschenswert, dass zumindest einige Teile der Verbindungsanordnung Systemcharakter besitzen und somit für verschiedene Varianten der Verbindungsanordnung - d.h. für die Kombination mit verschiedenen Abutments - verwendbar sind.

Ferner ist bis dato keine vollauf befriedigende konstruktive Lösung für ein Implantat mit einer nichtrotationssymmetrischen Aufnahmekontur am Innenkonus und einem zugehörigen komplementären Abutment des hier relevanten Typs bekannt, die sich mit einer Verbindungsanordnung zusammenfügen lassen. Die Erfindung hat daher zugleich die Aufgabe, die gattungsmässigen Implantate und die dazu komplementären Abutments zu vervollkommnen, welche sich mit der zugehörigen Verbindungsanordnung zusammenfassen lassen. Das in das Implantat mit seiner konischen Wurzelpartie möglichst spaltfrei eingesetzte Abutment muss rotationsgesichert sein und darf keinerlei axiale Instabilitäten aufweisen. Implantat und Abutment sollen sich miteinander verschrauben lassen, so dass die Insertion des Abutment in das Implantat ohne Klebemittel erfolgen kann und die Verbindung im Bedarfsfall wieder lösbar ist. Für spezielle Anwendungsfälle ist es wünschenswert, in das Implantat auch an sich herkömmliche Abutments mit einer konischen Wurzelpartie, d.h. mit einem zuunterst angeordneten Gewindezapfen, aber ohne nichtrotationssymmetrische, äussere Gegenkontur, einsetzen zu können.

### Wesen der Erfindung

Das Prinzip der vorgeschlagenen Verbindungsanordnung zwischen einem Implantat und einem Abutment besteht darin, dass im Abutment ein Einlass vorgesehen ist, der ein Axialdurchgang sein könnte. In diesen Einlass ist von seiten der Wurzelpartie eine Klemmschraube mit dem Kopf voran einsetzbar ist, wobei deren gegenüber dem Kopf im Durchmesser reduziertes Gewindestück zum Eingriff in die axial verlaufende Innengewindebohrung im Implantat bestimmt ist. Vor dem Einsetzen der Klemmschraube in das Abutment wird auf das Schaftstück der Klemmschraube - dieses liegt zwischen dem Kopf und dem Gewindestück - ein Spreizring aufgeschoben. Der Spreizring rastet in eine im Einlass des Abutment angeordnete Nut ein. Zur partiellen Aufnahme des Spreizrings auf der Klemmschraube ist unterhalb des Kopfes eine radiale Nut vorgesehen.

Es hat sich als günstig erwiesen, den Spreizring geschlitzt zu gestalten. Im Kopf der Klemmschraube befindet sich eine nichtrotationssymmetrische Ausnehmung, die zum Eingriff eines Eindrehwerkzeugs dient. Beim Anziehen oder Lösen der Klemmschraube wird mit dem Eindrehwerkzeug durch den Axialdurchgang in die Ausnehmung im Schraubenkopf eingegriffen. Bei abgewinkelten Abutments ist es zweckmässig, neben dem ebenfalls abgewinkelten und durchgängigen Einlass, eine laterale Öffnung für den Durchtritt des Eindrehwerkzeugs vorzusehen. Eine solche laterale Öffnung wird insbesondere dann angebracht, wenn der Einlass nicht durchgängig ist. Im Interesse des Systemcharakters aller Implantatelemente ist es von Vorteil, wenn die Innengewindebohrung im Implantat und der Innengewindeabschnitt im Abutment sowie das Gewindestück der Klemmschraube gleiche bzw. zueinander komplementäre Dimensionen aufweisen.

Das kennzeichnende Merkmal des erfindungsgemässen Implantats besteht darin, dass in der Innenwandung der konischen Aufnahmebohrung, d.h. am Innenkonus des Implantatkopfes eine nichtrotationssymmetrische Aufnahmekontur vorgesehen ist, wobei sowohl über der Aufnahmekontur als auch darunter je ein radial ununterbrochener Abschnitt des Innenkonus verbleibt. Wird ein Vielkant als Aufnahmekontur vorgesehen, so ist dieser an der Unterseite voll ausgebildet, während seine Spitzen nach oben hin parabelförmig auslaufen.

Die essentiellen Merkmale des erfindungsgemässen Abutment bestehen in folgendem: Bei einem durchgängigen Einlass kann oben ein Innengewindeabschnitt vorgesehen sein, in den eine Okklusalschraube zur Fixierung der anzubringenden Suprakonstruktion eindrehbar ist. An der Wurzelpartie des Abutment ist eine zur Aufnahmekontur komplementäre äussere Gegenkontur vorgesehen, die speziell und vorteilhaft als Aussenvielkant gestaltet sein kann. In Analogie zur Positionierung der im Implantat vorhandenen Aufnahmekontur ist die Gegenkontur so angeordnet, dass sowohl darüber als auch darunter je ein radial ununterbrochenes Segment der Wurzelpartie verbleibt und die Mantelflächen beider Segmente miteinander fluchten. Das untere Segment kann aber auch entfallen. Im Einlass, innerhalb des Bereiches der Wurzelpartie, befindet sich eine radial umlaufende Nut.

Durch den im Abutment vorgesehenen Einlass - sofern dieser gurchgängig ist -, ansonsten durch die zusätzliche laterale Öffnung, ist es möglich, mit einem an sich bekannten Spezialschraubendreher auch in schrägem Ansatz formschlüssig in die komplementäre Ausnehmung im Kopf der Klemmschraube einzugreifen. Der Schraubendreherkopf ist mehrkantig und hat im Vertikalquerschnitt eine birnenförmige Gestalt.

Dank der Erfindung stehen nun eine Verbindungsanordnung, ein Implantat und ein komplementäres Abutment zur Verfügung, die sich durch eine vorteilhafte Montierbarkeit bzw. Demontierbarkeit auszeichnen. Ferner ist der stabile und präzise Zusammenhalt im montierten Zustand höchst zuverlässig gewährleistet. In das erfindungsgemäss modifizierte Implantat können sowohl gerade als auch abgewinkelte Abutments des erfindungsgemässen Typs sowie herkömmliche gerade Abutments eingesetzt werden. D.h., in das Implantat mit der speziellen Aufnahmekontur im Implantatkopf sind auch Abutments mit einer konischen Wurzelpartie einsetzbar, die keine Gegenkontur aufweisen. Diese Abutments kann man ebenfalls mittels separater Klemmschrauben fixieren, oder die Abutments sind einstückig und weisen bekanntermassen zuunterst einen Gewindezapfen auf, der in die Innengewindebohrung im Implantat eingreift.

### Zeichnungen und Ausführungsbeispiel

Anhand der beiliegenden Zeichnungen erfolgt nachstehend die detaillierte Beschreibung mehrerer Ausführungsbeispiele der erfindungsgemässen Verbindungsanordnung, der Innenkonfiguration des Implantats und des Abutment. Abschliessend werden mögliche Modifikationen erwähnt. Es zeigen:
- Figur 1A:: ein Implantat gemäss dem Stand der Technik im Teilschnitt;
- Figur 1B:: das Implantat gemäss Figur 1A im Vertikalschnitt;
- Figur 1C:: ein abgewinkeltes Abutment mit eingesetzter Klemmschraube gemäss dem Stand der Technik;
- Figur 1D:: die Bauteile gemäss den Figuren 1A bis 1C in verschraubtem Zustand;
- Figur 2A:: ein gerades Abutment im Vertikalschnitt;
- Figur 2B:: ein abgewinkeltes Abutment mit unterer konischer Partie;
- Figur 2C:: ein abgewinkeltes Abutment mit radial umlaufendem Kragen, welcher auf der Implantatschulter aufsitzt;
- Figur 2D:: eine Klemmschraube;
- Figur 2E:: einen Spreizring;
- Figur 2F:: eine Zentrierhülse in der Vorderansicht;
- Figur 2G:: die Zentrierhülse gemäss Figur 2F in der Draufsicht;
- Figur 3A:: eine Verbindungsanordnung zwischen einem Implantat und dem geraden Abutment gemäss Figur 2A;
- Figur 3B:: eine Verbindungsanordnung zwischen einem Implantat und dem abgewinkelten Abutment gemäss Figur 2B;
- Figur 3C:: eine Verbindungsanordnung zwischen einem Implantat und dem abgewinkelten Abutment gemäss Figur 2C;
- Figur 4A:: eine Klemmschraube mit angesetztem Spreizring;
- Figur 4B:: die Klemmschraube mit aufgeschobenem Spreizring;
- Figur 4C:: die Klemmschraube mit Spreizring beim Einschieben in ein Abutment gemäss Figur 2B;
- Figur 4D:: die Klemmschraube mit Spreizring vollständig in das Abutment gemäss Figur 2B eingeschoben;
- Figur 4E:: die komplette Verbindungsanordnung gemäss Figur 3B zwischen Implantat und Abutment mit angenähertem Spezialschraubendreher;

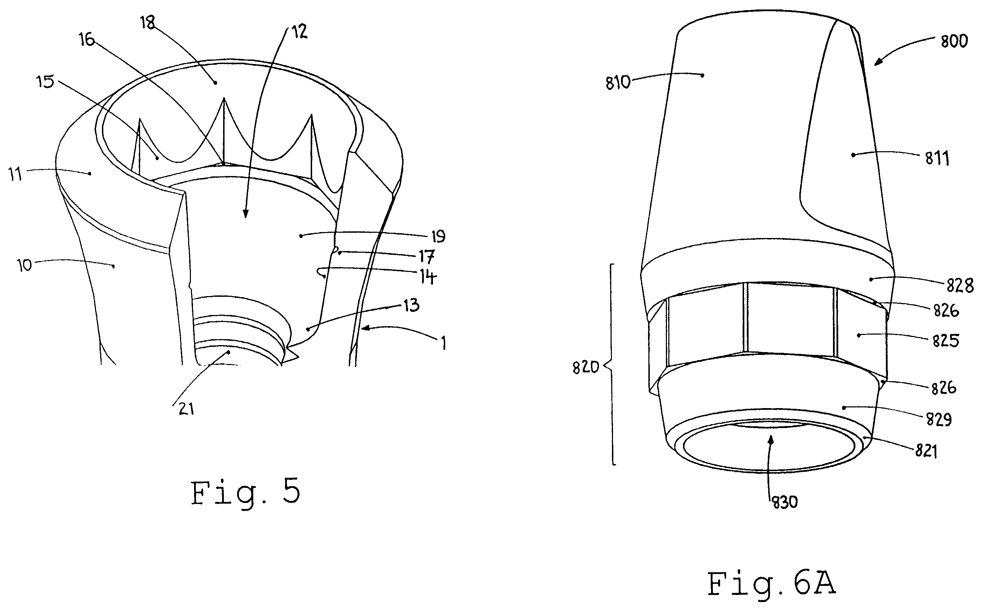

- Figur 5 :: einen Implantatkopf mit der Aufnahmekontur im Teilschnitt;
- Figur 6A:: eine Perspektivansicht eines Abutment mit einer Gegenkontur an der konischen Wurzelpartie und einer Sicherungsfläche am Kopfteil;

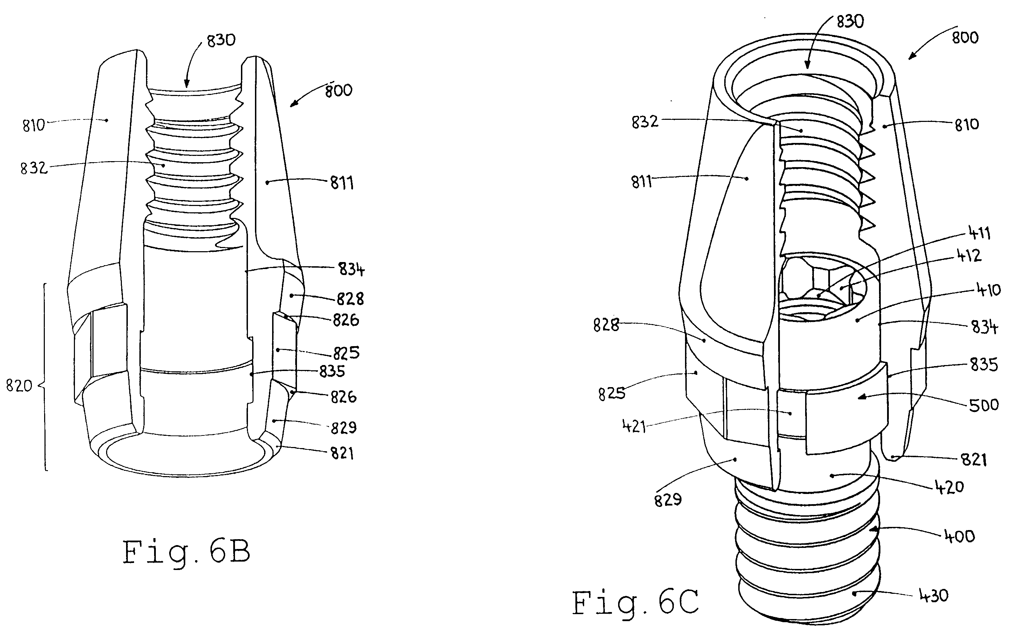

- Figur 6B:: das Abutment gemäss Figur 6A im vertikalen Teilschnitt;
- Figur 6C:: das Abutment gemäss Figur 6A mit eingesetzter Klemmschraube und Spreizring im vertikalen Teilschnitt;

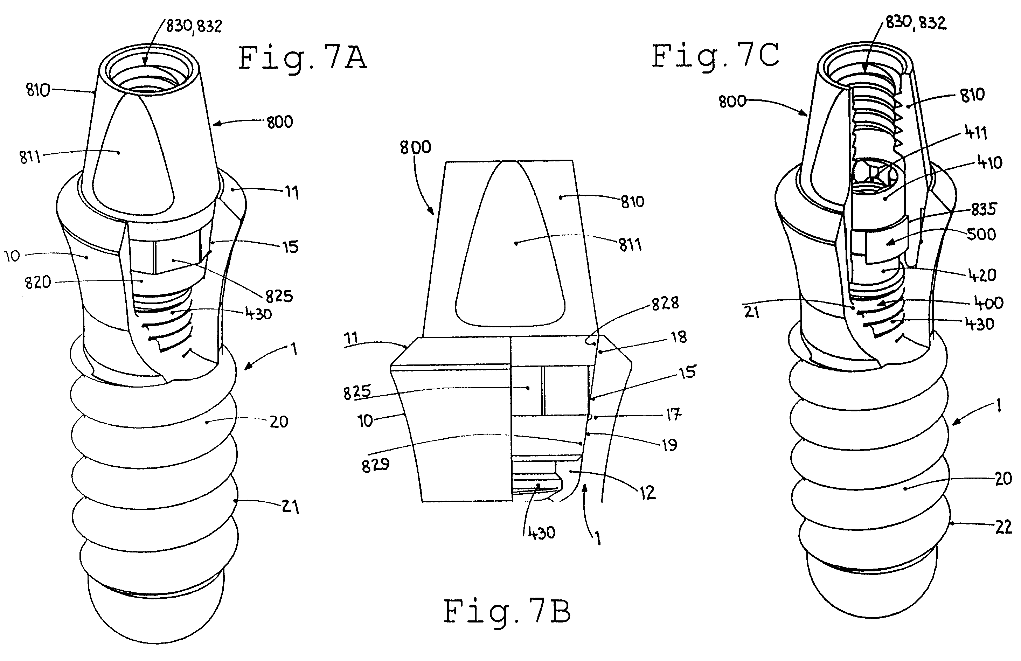

- Figur 7A:: das Implantat gemäss Figur 5 mit eingesetztem Abutment gemäss Figur 6A;
- Figur 7B:: eine vergrösserte Darstellung aus Figur 7A; und
- Figur 7C:: die Darstellung gemäss Figur 7A mit dem Abutment ebenfalls im Teilschnitt.

### Figur 1B

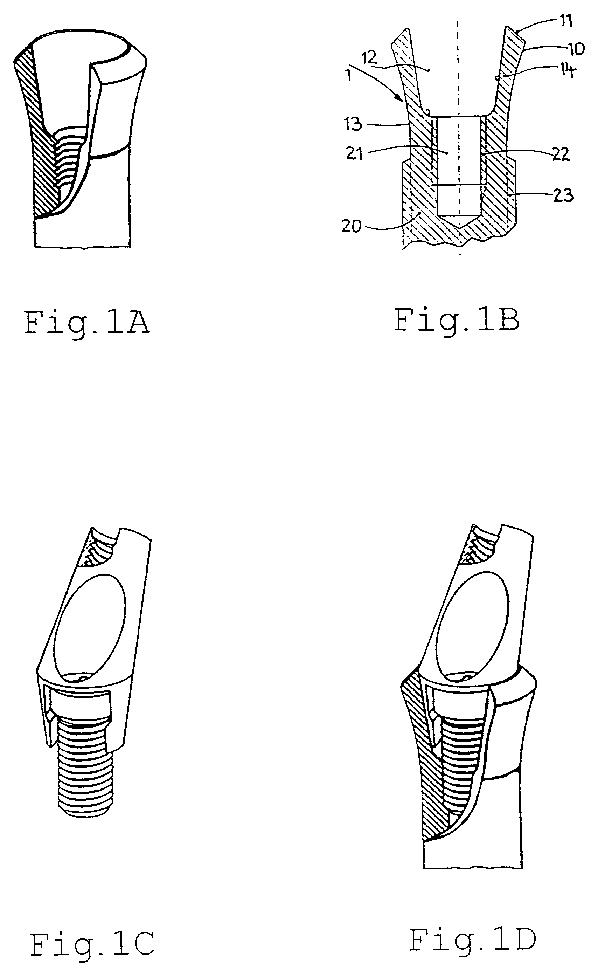

Das in der Verbindungsanordnung verwendete Implantat **1** stellt deren Basiselement dar und ist von an sich bekanntem Aufbau. Die hier nur dargestellte obere Partie könnte sowohl zu einem Hohlschrauben- als auch zu einem Vollschraubenimplantat gehören. Die Verbindungsanordnung ist jedoch gleichermassen für Hohlkörper- und Vollkörperimplantate in gerader oder abgewinkelter Version geeignet. Zur weiteren Beschreibung des Implantats **1** wird auf die Beschreibung im Stand der Technik zu den Figuren 1A bis 1D verwiesen.

Für die gesamte weitere Beschreibung gilt folgende Festlegung. Sind in einer Figur zum Zweck zeichnerischer Eindeutigkeit Bezugsziffern enthalten, aber im unmittelbar zugehörigen Beschreibungstext nicht erläutert, so wird auf deren Erwähnung in vorangehenden Figurenbeschreibungen Bezug genommen. Im Interesse der Übersichtlichkeit wird auf die wiederholte Bezeichnung von Bauteilen in nachfolgenden Figuren zumeist verzichtet, sofern zeichnerisch eindeutig erkennbar ist, dass es sich um "wiederkehrende" Bauteile handelt.

### Figur 2A

Das gerade Abutment **100** besitzt eine obere, sich nach oben konisch verjüngende Halspartie **110** und eine untere, sich nach unten konisch verjüngende Wurzelpartie **120**. Axial durch das Abutment **100** erstreckt sich ein Einlass **130**, der zuoberst in einem Schraubensitz **131** mündet. An den Schraubensitz **131** schliesst sich ein abwärts verlaufender Innengewindeabschnitt **132** an, der vor dem Übergang **140** zwischen der Halspartie **110** und der Wurzelpartie **120** endet. An einer Schrägfläche **133** geht der Innengewindeabschnitt **132** in einen erweiterten Schraubenkopfabschnitt **134** über. Der Einlass **130** mündet am Auslauf **121** der Wurzelpartie **120**, wobei der Auslauf **121** eine Rundkontur **122** besitzt und vor Erreichen der Rundkontur **122** eine radial umlaufende, bandförmige Nut **135** vorgesehen ist, die der Aufnahme eines Spreizringes dient.

### Figur 2B

Das gerade, rotationssymmetrische Abutment **100** ist nahezu identische zum hier gezeigten, abgewinkelten Abutment **200** aufgebaut. Auch das abgewinkelte Abutment **200** besitzt eine sich nach oben konisch verjüngende Halspartie **210**, die am Übergang **240** in eine sich nach unten konisch verjüngende Wurzelpartie **220** übergeht. Die Halspartie **210** und die Wurzelpartie **220** sind jedoch nicht koaxial zueinander angeordnet, sondern setzen am Übergang **240** abgewinkelt aneinander an, so dass auch der sich durch das Abutment **200** erstreckende Einlass **230** adäquat abgewinkelt ist. Zuoberst mündet der Einlass **230** ebenfalls in einem Schraubensitz **231**, an den sich ein abwärts verlaufender Innengewindeabschnitt **232** anschliesst. An einer asymmetrischen Schrägfläche **233** geht der Innengewindeabschnitt **232** in einen erweiterten Schraubenkopfabschnitt **234** über. Der Einlass **230** mündet in der Wurzelpartie **220** am Auslauf **221**, der eine Rundkontur **222** besitzt. Vor der Mündung ist auch hier im Einlass **230** eine radial umlaufende Nut **235** vorgesehen.

### Figur 2C

Das modifizierte, abgewinkelte Abutment **300** unterscheidet sich deutlich vom Abutment **200**. Die Halspartie **310** ist noch annähernd identisch, während die Wurzelpartie **320** starke Veränderungen aufweist. Auch der Übergang **340** ist anders gestaltet. Durch das Abutment **300** erstreckt sich wiederum ein abgewinkelter Einlass **330**. Die Halspartie **310** ist gleichfalls nach oben konisch verjüngt, an welche die Wurzelpartie **320** im Übergang **340** abgewinkelt ansetzt. Der Einlass **330** mündet auch hier in einem Schraubensitz **331**, an den sich ein abwärts verlaufender Gewindeabschnitt **332** anschliesst, welcher an einer asymmetrischen Schrägfläche **333** in einen erweiterten Schraubenkopfabschnitt **334** übergeht. Der Einlass **330** mündet in der Wurzelpartie **320** mit der Rundkontur **322** am Auslauf **321**. In der verkürzten Wurzelpartie **320**, d.h. zwischen dem Übergang **340** und der unten abschliessenden Rundkontur **322**, ist im Einlass **330** wiederum eine radial umlaufende, bandförmige Nut **335** vorgesehen. Der Übergang **340** erhält dadurch seine besondere Gestalt, dass an der Unterseite der Halspartie **310** eine Auskehlung **341** vorhanden ist und die Halspartie **310** sich in einem abwärts erweiternden Kragen **342** fortsetzt. Dieser Kragen **342** bildet eine ringförmige Gegenschulter **343**, welche beim Zusammenbau mit dem Implantat **1** auf den inneren Ringteil der Implantatschulter **11** (s. Figur 1B) aufsetzt.

### Figur 2D

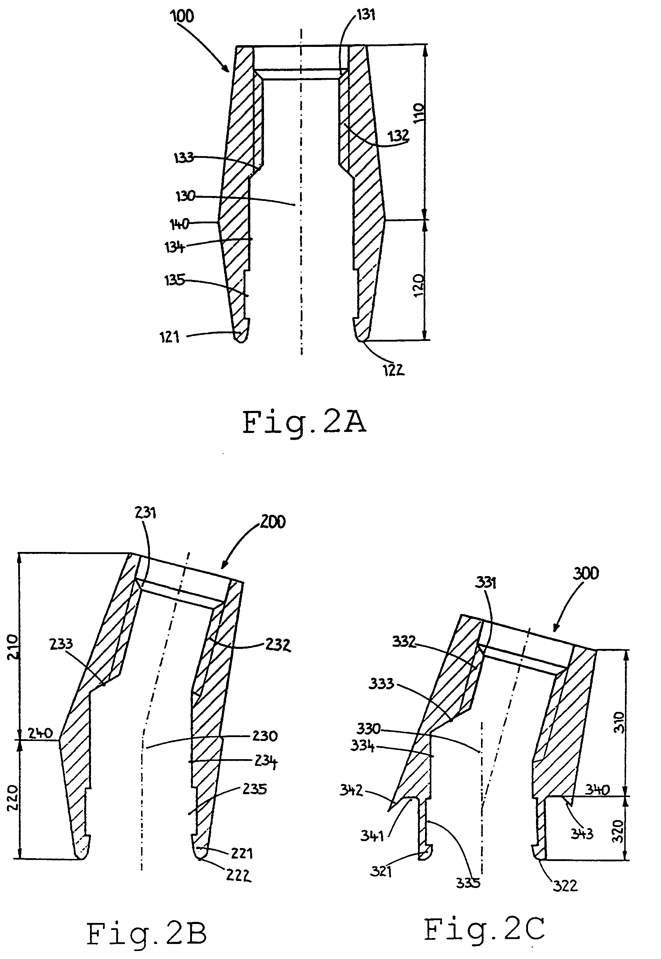

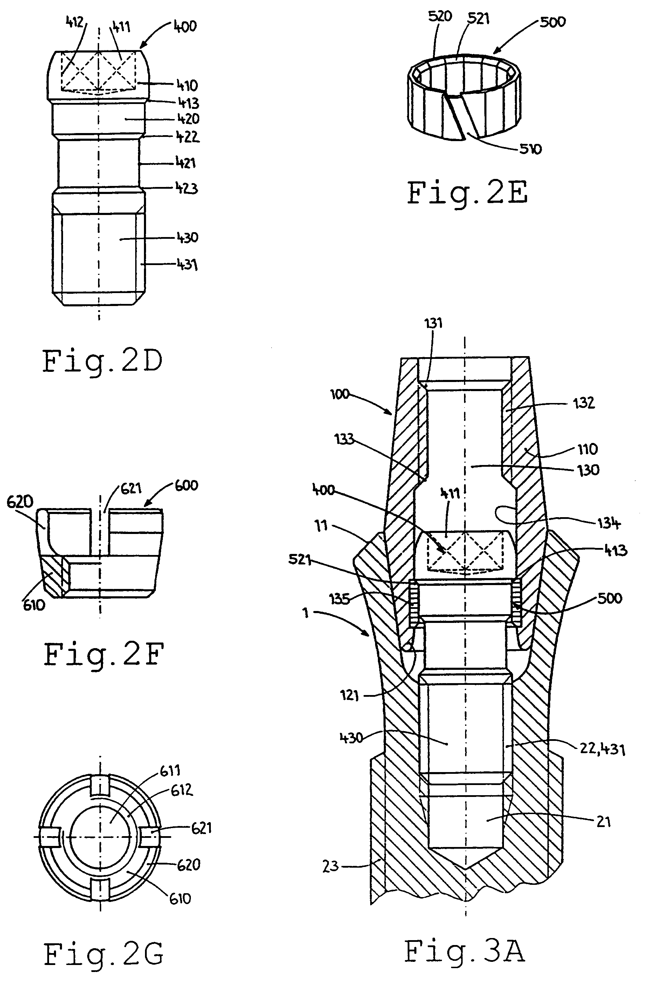

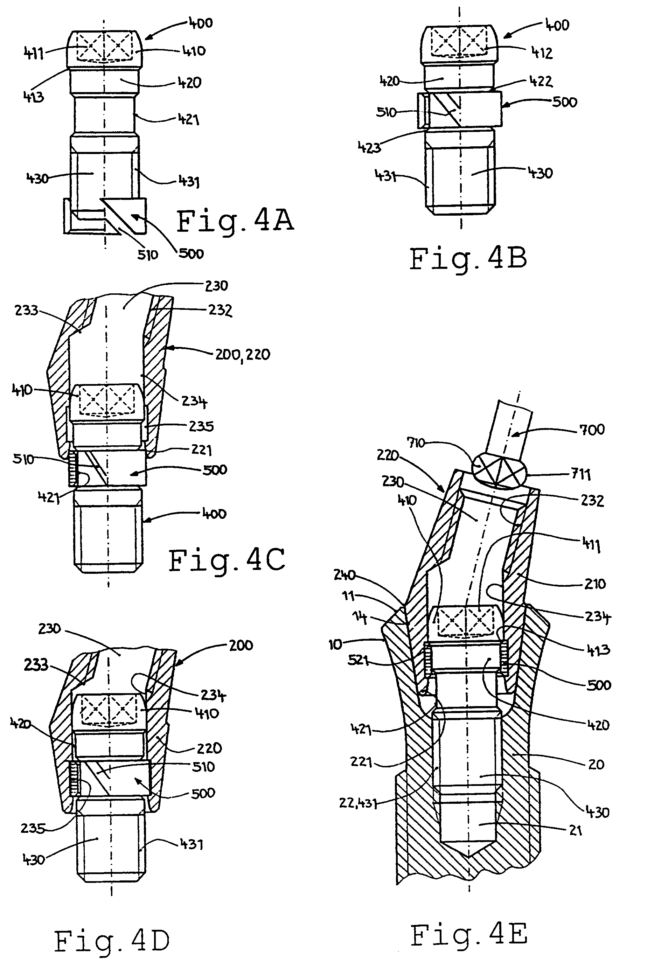

Für den Aufbau der erfindungsgemässen Verbindungsanordnung auf dem Implantat **1** ist eines der zuvor beschriebenen Abutments **100**,**200**,**300** alternativ erforderlich; eine Klemmschraube **400** wird für jede der unterschiedlichen Verbindungsanordnungen benötigt. Die Klemmschraube **400** besteht - abwärts betrachtet - aus dem Kopf **410**, dem daran anschliessenden, im Durchmesser reduzierten Schaftstück **420** und dem unteren Gewindestück **430**. An der Oberseite des Kopfes **410** ist eine Ausnehmung **411** mit einer Innenkontur **412** vorgesehen, die zum Schraubendreherkopf (s. Figur 4E) komplementär gestaltet ist. Den Übergang zwischen dem Kopf **410** und dem Schaftstück **420** bildet eine abgeschrägte Auflagefläche **413**. Etwa in der Mitte besitzt das Schaftstück **420** eine radial umlaufende Nut **421** zur partiellen, zeitweiligen Einbettung eines Spreizringes (s. Figur 2E). Abschrägungen **422** und **423** bilden die jeweiligen Übergänge von der Nut **421** hin zum vollen Durchmesser des Schaftstückes **420**. Das Gewindestück **430** weist das Aussengewinde **431** auf und ist komplementär zur Gewindebohrung **21** im Implantat **1** gestaltet, so dass man das Gewindestück **430** in die Gewindebohrung **21** einschrauben kann.

### Figur 2E

Der reifenförmige Spreizring **500** besitzt einen diesen öffnenden Schlitz **510**. Es hat sich als vorteilhaft erwiesen, den Schlitz **510** schräg und aufsteigend linksorientiert vorzusehen. Die Oberkante **520** des Spreizrings **500** hat eine nach innen weisende Schrägfläche **521**, die komplementär zur Auflagefläche **413** am Kopf **410** der Klemmschraube **400** ausgebildet ist. Die Abmessungen des Spreizrings **500** sind so gewählt, dass er auf die Klemmschraube **400** aufschiebbar ist und in deren Nut **421** einrastet.

### Figuren 2F und 2G

Beim Aufbau einer Verbindungsanordnung mit einem abgewinkelten Abutment **300** wird zusätzlich eine im Prinzip rotationssymmetrische Zentrierhülse **600** eingefügt. Die Zentrierhülse **600** besteht aus einer reifenförmigen Basispartie **610** und einem sich daran anschliessenden, nach oben erstreckenden Mantelfortsatz **620**. Äusserlich erweitert sich die Zentrierhülse **600** nach oben konisch. In der Basispartie **610** ist eine axiale Bohrung **611** mit einem Innengewinde **612** vorhanden, so dass man die Zentrierhülse **600** auf das Gewindestück **430** der Klemmschraube **400** aufschrauben kann. Der Mantelfortsatz **620** ist dünnwandiger als die Basispartie **610**, wodurch die lichte Weite im Innern der Zentrierhülse **600** vergrössert ist. Im Mantelfortsatz **620** sind mehrere vertikale Dehnungsschlitze **621** vorgesehen, die sich etwa bis auf die Höhe der Basispartie **610** erstrecken.

### Figur 3A

Auf einem Implantat **1** ist ein gerades Abutment **100** mittels der Klemmschraube **400** und des Spreizrings **500** fixiert, wobei die konische Wurzelpartie **120** des Abutment **100** in der Hauptbohrung **12**, d.h. im Innenkonus **14** des Implantats **1**, steckt. Der Kopf **410** der Klemmschraube **400** sitzt im Schraubenkopfabschnitt **134** innerhalb des Einlasses **130**, und der auf die Klemmschraube **400** aufgesteckte Spreizring **500** liegt mit seiner Schrägfläche **521** an der Auflagefläche **413** der Klemmschraube **400** an. Zugleich ist der Spreizring **500** in der Nut **135** des Abutment **100** eingebettet. Das Gewindestück **430** der Klemmschraube **400** ist fest in die Gewindebohrung **21** des Implantats **1** eingeschraubt; das Aussengewinde **431** und das Innengewinde **21** sind miteinander im Eingriff. Durch die Zugkraft der Klemmschraube **400**, die sich auf den Spreizring **500** überträgt, wird das Abutment **100** sowohl axial als auch gegen Rotation sicher fixiert. Die Konizität an der Wurzelpartie **120** und am Innenkonus **14** bewirken eine zuverlässige Stabilität der Verbindungsanordnung. Der Innengewindeabschnitt **132** dient der Fixierung weiterer Aufbauten.

### Figur 3B

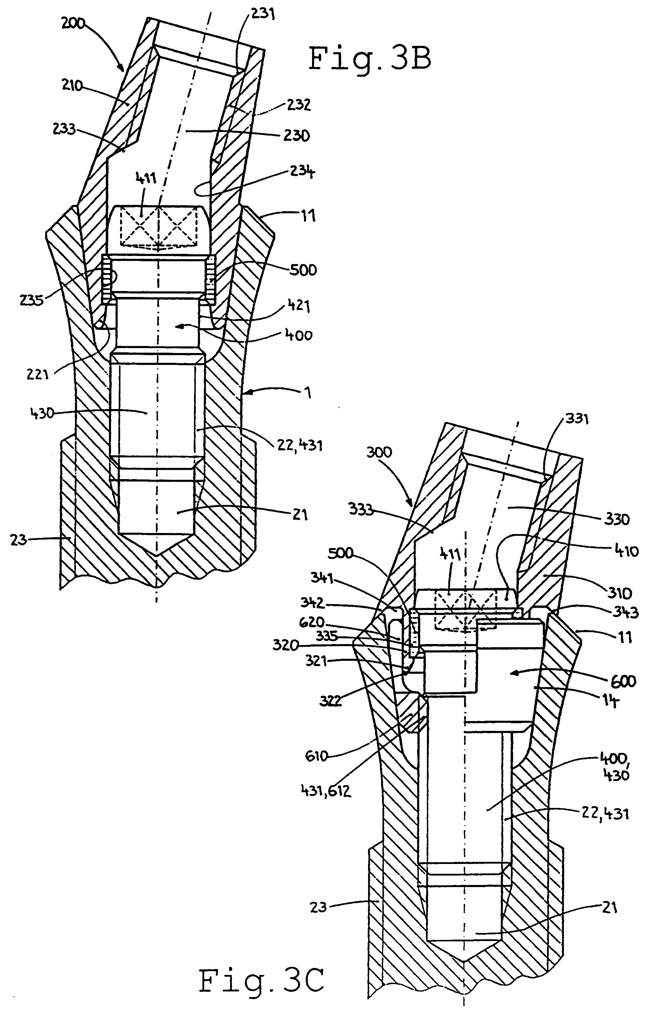

Hier ist auf einem Implantat **1** ein abgewinkeltes Abutment **200** mittels der Klemmschraube **400** und des Spreizrings **500** fixiert. Die Bauteile sind in Analogie zu Figur 3A miteinander verbunden.

### Figur 3C

Auf dem Implantat **1** ist ein abgewinkeltes Abutment **300** fixiert, dessen vom Kragen **342** gebildete Gegenschulter **343** sich an der inneren Kreisringfläche auf der Implantatschulter **11** abstützt. Auch bei dieser Verbindungsanordnung bewirken die Klemmschraube **400** und der Spreizring **500** deren Zusammenhalt und dauerhafte Stabilität in der gewählten Positionierung, wobei zusätzlich die Zentrierhülse **600** eingefügt ist. Die Zentrierhülse **600** befindet sich aufgeschraubt auf dem Gewindestück **430** der Klemmschraube **400** innerhalb der Hauptbohrung **12** des Implantats **1** und schmiegt sich an dessen Innenkonus **14** an. Das Aussengewinde **431** der Klemmschraube **400** und das Innengewinde **612** der Zentrierhülse **600** stehen miteinander in Eingriff. Der Spreizring **500** liegt in der Nut **335** der Wurzelpartie **320** des Abutment **300**, wobei der Auslauf **321** mit der Rundkontur **322** den Spreizring **500** untergreift. Der Mantelfortsatz **620** der Zentrierhülse **600** ist zwischen die Wurzelpartie **320** des Abutment **300** und den Innenkonus **14** des Implantats **1** geklemmt. Auch hier sitzt der Kopf **410** der Klemmschraube **400** so nahe am Spreizring **500**, dass die Auflagefläche **413** und die Schrägfläche **521** aufeinandergepresst sind.

### Figuren 4A bis 4E

Anhand dieser Figurenfolge wird nun das Herstellen der Verbindungsanordnung unter beispielhafter Verwendung eines abgewinkelten Abutment **200** beschrieben.

### Figur 4A

Der Spreizring **500** wird von der Seite des Gewindestücks **430** auf die Klemmschraube **400** aufgeschoben und umfasst zunächst das Aussengewinde **431**. Hierdurch biegt sich der insoweit elastisch verformbare Spreizring **500** auf, d.h. der Schlitz **510** vergrössert sich.

### Figur 4B

Der Spreizring **500** wird in axialer Richtung weiter auf die Klemmschraube **400** aufgeschoben, bis am Schaftstück **420** die Nut **421** erreicht ist, wo sich der Spreizring **500** infolge seiner Eigenspannung selbst positioniert. Da die Nut **421** einen geringeren Durchmesser besitzt als das zuvor überfahrene Gewindestück **430** und der untere Abschnitt des Schaftstücks **420**, kann sich der Spreizring **500** etwas zusammenziehen, wodurch sich der Schlitz **510** verengt.

### Figur 4C

Soweit vormontiert, wird im nächsten Schritt die Klemmschraube **400** mit dem aufgeschobenen Spreizring **500** von unten in das Abutment **200** - d.h. von seiten des Auslaufs **221** in den Einlass **230** - eingeschoben. Die Rundkontur **222** am Auslauf **221** sowie das vorhandene Spiel des in der Nut **421** sitzenden Spreizrings **500** erlauben das leichtgängige Einführen der Kombination aus Klemmschraube **400** und Spreizring **500** in das Abutment **200**. Der Kopf **410** der Klemmschraube **400** gelangt hierbei sukzessive in den Schraubenkopfabschnitt **234**.

### Figur 4D

Nach weiterem axialem Einschieben nähert sich der Kopf **410** der Schrägfläche **233** im Abutment **200** und zugleich gelangt der Spreizring **500** in die Nut **235**, in welche der Spreizring **500** aufgrund seiner Vorspannung schnappt. Hier kann sich der Spreizring **500** wieder ausdehnen, wodurch sich der Schlitz **510** erneut vergrössert.

### Figur 4E

Schliesslich setzt man das Abutment **200** in das Implantat **1** in der gewünschten Drehposition ein. Nun wird mit einem Spezialschraubendreher **700** durch die Halspartie **210** und den Einlass **230** die Klemmschraube **400** angezogen. Der Schraubendreherkopf **710** kommt mit seiner Aussenkontur **711**, welche zur Innenkontur **412** der Klemmschraube **400** komplementär ist, in Eingriff. Sukzessive schraubt sich das Gewindestück **430** der Klemmschraube **400** in die im Implantat **1** befindliche Gewindebohrung **21** hinein und gleichzeitig wird dadurch der obere, zylindrische Abschnitt des Schaftstücks **420** in den positionierten Spreizring **500** eingedreht. Dieses Eindrehen wird durch die Abschrägung **422** begünstigt. Der geschlitzte Spreizring **500** erweitert sich und ist mit noch verbleibendem Spiel in der Nut **421** positioniert. Bei weiterem Anziehen der Klemmschraube **400** erhält man eine rigide und sichere Verbindung zwischen dem Implantat **1** und dem eingesetzten Abutment **200**.

Die gleichen Arbeitsgänge sind erforderlich, wenn eine Verbindungsanordnung mit einem geraden Abutment **100** oder einem angewinkelten Abutment **300** aufgebaut werden soll. Beim Einsatz des speziellen, abgewinkelten Abutment **300** muss vor dem Einsetzen der Kombination aus Klemmschraube **400** und Spreizring **500** in das Implantat **1** noch die Zentrierhülse **600** auf die Klemmschraube **400** aufgeschraubt werden.

### Figur 5

Das in der Verbindungsanordnung verwendete Implantat **1** stellt deren Basiselement dar und ist von an sich bekanntem Aufbau, abgesehen von der speziellen nichtrotationssymmetrischen Aufnahmekontur **15** im Innenkonus **14** im Implantatkopf **10**. Hier ist die Aufnahmekontur **15** als radial umlaufender Vielkant ausgebildet. Dieser Vielkant kann durch Materialabtrag erzeugt werden, wobei sich dann für die Bearbeitung eine unterhalb der Aufnahmekontur **15**, ebenfalls im Innenkonus **14** radial umlaufende Nut **17** empfiehlt. Durch den Materialabtrag entstehen unten am Vielkant Absätze **16**. An der Unterseite ist der Vielkant voll ausgebildet, während er nach oben hin in parabelförmigen Spitzen ausläuft. Vorteilhaft liegt die Aufnahmekontur **15** derart innerhalb des Innenkonus **14**, dass sowohl über der Aufnahmekontur **15** als auch unter dieser unterbrechungslose Abschnitte **18**,**19** des Innenkonus **14** erhalten bleiben. Für einen möglichst stabilen und dichten Sitz des einzusetzenden Abutment ist es sinnvoll, den oberen Abschnitt **18** in ausreichender Höhe zu gestalten.

### Figur 6A

Das Abutment **800** weist oben die Halspartie **810** und die sich nach unten anschliessende Konuspartie **820** auf. Durch das Abutment **800** erstreckt sich der Einlass **830**, hier im Form eines axialen Durchgangs. An der Halspartie **810** ist beispielhaft zumindest eine im Prinzip vertikal verlaufende Planfläche **811** vorgesehen, die der Rotationssicherung der später auf das Abutment **800** aufzubringenden Kronenkappe bzw. Suprakonstruktion dient. Zugleich ist die Planfläche **811** zum Ansetzen eines Einschraubwerkzeugs benutzbar. Es ist eine vorteilhafte Variante, drei jeweils um 120° versetzte Planflächen **811** anzuordnen. In Richtung der Konuspartie **820** läuft die Planfläche **811** bogenförmig aus.

Die Konuspartie **820** weist eine Gegenkontur **825** auf, die zur im Implantat **1** befindlichen Aufnahmekontur **15** komplementär ist, so dass das Abutment **800** rotationsgesichert in das Implantat **1** eingesetzt werden kann. Analog zu dem als Aufnahmekontur **15** ausgebildeten, vertieften Vielkant ist die Gegenkontur **825** in diesem Beispiel ebenfalls als Vielkant gestaltet. Die Gegenkontur **825** ist derart auf der Konuspartie **820** angeordnet, dass auch hier unterbrechungslose Segmente **828**,**829** der Konuspartie **820** erhalten bleiben. Die Mantelflächen beider Segmente **828**,**829** fluchten zueinander, wie auch die Abschnitte **18**,**19** des Innenkonus **14** im Implantatkopf **10** zueinander fluchten. In den Übergängen vom Segment **828** zur Gegenkontur **825** und von letzterer zum Segment **829** entstehen Absätze **826**. Zuunterst endet das Abutment **800** und dessen Segment **829** mit dem Auslauf **821**. Es ist auch möglich, die Gegenkontur **825** unmittelbar an den Auslauf **821** angrenzend anzuordnen.

### Figur 6B

Innerhalb des Einlasses **830** kann ein oben beginnender Innengewindeabschnitt **832** vorgesehen sein, und vor der unteren Mündung des Einlasses **830** gibt es eine radial umlaufende Nut **835**. Der eventuelle Innengewindeabschnitt **832** würde der Aufnahme einer Okklusalschraube dienen, mit der man die Suprakonstruktion befestigen könnte. Der Gewindestift der Okklusalschraube erstreckt sich nur partiell in den Einlass **830** hinein. Zwischen dem Innengewindeabschnitt **832** und der Nut **835** verbleibt ein gewindeloser Schraubenkopfabschnitt **834**.

### Figur 6C

Für den Aufbau der Verbindungsanordnung aus Implantat **1** und Abutment **800** wird eine Klemmschraube **400** verwendet. Die Klemmschraube **400** besteht - abwärts betrachtet - aus dem Kopf **410**, dem daran anschliessenden, im Durchmesser reduzierten Schaftstück **420** und dem unteren Gewindestück **430**. An der Oberseite des Kopfes **410** ist eine Ausnehmung **411** mit einer Innenkontur **412** vorgesehen, die zur Spitze des verwendeten Eindrehwerkzeugs komplementär gestaltet ist. Unterhalb des Kopfes **410** ist am Schaftstück **420** eine radial umlaufende Nut **421** zur partiellen Einbettung des Spreizrings **500** vorgesehen. Das Gewindestück **430** ist komplementär zur Innengewindebohrung **21** im Implantat **1** gestaltet, so dass man das Gewindestück **430** in die Innengewindebohrung **21** einschrauben kann.

Die Klemmschraube **400** mit dem Spreizring **500**, welcher in der Nut **421** sitzt, wird von unten und mit dem Kopf **410** voran in den Einlass **830** des Abutment **800** eingeschoben, bis der Spreizring **500** - dieser könnte reifenförmig und geschlitzt sein - in die im Abutment **800** vorhandene Nut **835** einrastet. Der Kopf **410** der Klemmschraube **400** kommt somit innerhalb des Schraubenkopfabschnitts **834** im Einlass **830** des Abutment **800** zu liegen. Das Eindrehwerkzeug ist durch den Einlass **830** zum Kopf **410** der Klemmschraube **400** einführbar.

### Figuren 7A bis 7C

Im zusammengesetzten Zustand sitzt das Abutment **800** - hier mit einer Planfläche **811** versehen - mit seiner konischen Wurzelpartie **820** im Implantatkopf **10**, während die Halspartie **810** des Abutment **800** die Implantatschulter **11** überragt. Die Abschnitte **18**,**19** des Innenkonus **14** kommen mit den Segmenten **828**,**829** der Wurzelpartie **820** des Abutment **800** aneinanderliegend zusammen. Die Gegenkontur **825** des Abutment **800** sitzt in der Aufnahmekontur **15** des Implantats **1**. Die angezogene Klemmschraube **400** drückt mit ihrem Kopf **410** auf den Spreizring **500**, der auch partiell in der Nut **835** im Abutment **800** sitzt. Das Gewindestück **430** der Klemmschraube **400** greift in die Innengewindebohrung **21** im Implantat **1** ein. Somit wird das Abutment **800** in das Implantat **1** hineingezogen, wobei die axiale Fixierung und die Rotationssicherung gewährleistet sind. In der Höhe zwischen der Aufnahmekontur **15** und der Gegenkontur **825** besteht ein gewisses Spiel, so dass der Absatz **826** der Gegenkontur **825** keinesfalls auf dem Absatz **16** im Implantat **1** aufsetzt. Massgeblich ist, dass die konischen Flächen **18**,**19**;**828**,**829** beider Teile **1**,**800** aneinanderliegen.

Zu den vorbeschriebenen Ausführungsbeispielen sind weitere konstruktive Variationen realisierbar. Hier ausdrücklich erwähnt seien noch:
- Es ist auch möglich, in abgewinkelten Abutments **200**,**300**,**800** mit oder ohne Gegenkontur **825**, eine laterale Öffnung für den Eingriff eines Schraubendrehers zur Betätigung der Klemmschraube **400** vorzusehen. Wenn der Einlass **230**,**330**,**830** durchgängig ist und oben einen Innengewindeabschnitt **232**,**332**,**832** aufweist, dann haben der Einlass und das Gewinde allein die Funktion, die Okklusalschraube zur Fixierung der Suprakonstruktion aufzunehmen. Ist der Einlass **230**,**330**,**830** nicht durchgängig und es fehlt der Innengewindeabschnitt **232**,**332**,**832**, so wird die Suprakonstruktion in herkömmlicher Weise aufzementiert.
- Die im Innenkonus **14** im Implantatkopf **10** vorgesehene nichtrotationssymmetrische Aufnahmekontur **15**, könnte anstelle ihrer durch Materialabtrag vertiefenden Gestalt auch erhaben sein, wobei dann im Abutment eine entsprechend vertiefte Gegenkontur vorhanden sein müsste.
- Für die Aufnahmekontur **15** und die dazu komplementäre Gegenkontur **825** kommen alle praktikablen, nichtrotationssymmetrischen Geometrien, wie Vielkante, Ovale, Stern- und und Rosettenformen, aber auch einfache Keile, Stifte und Zapfen mit den jeweils dazu komplementären, formschlüssigen Gebilden in Betracht.
- Die Form und das Vorhandensein von äusseren, rotationssichernden Konturen an der Halspartie **810** des Abutment **800** ist nicht zwingend, und die Halspartien **810** als solche können eine beliebige, praktikable Gestalt aufweisen. Die Planflächen **811** könnten entfallen oder durch sonstige, die Verdrehsicherung bewirkende Geometrien oder Gebilde ersetzt werden. An der Halspartie **810** könnte man einen Eingriff für eine transversale Verschraubung der Suprakonstruktion vorsehen.
- Die Halspartien **110**,**210**,**310**,**810** der Abutments **100**,**200**, **300**,**800** sind zur Anpassung in üblichem Umfang beschleifbar.
- Das untere konische Segment **829** am Abutment **800** kann kleiner oder grösser als das obere Segment **828** sein. Das Segment **829** könnte auch ganz entfallen, wodurch sich die Gegenkontur **825** bis zum Auslauf **821** erstrecken würde.
- Die Abutments **800** können sowohl gerade als auch abgewinkelt sein. Bei einem geraden Abutment **800** mit durchgehendem Einlass **830** verläuft dieser geradlinig. Bei einem abgewinkelten Abutment hingegen - dessen Halspartie ist gegenüber der Wurzelpartie abgewinkelt - weist ein durchgehender Einlass eine entsprechende Abwinkelung auf.
- Für den Kopf **410** der Klemmschraube **400** könnte man anstatt der Ausnehmung **411** mit der Innenkontur **412** auch eine äussere Kontur vorsehen, auf die ein Eindrehwerkzeug aufsteckbar ist.
- An der Klemmschraube **400** ist der untere Abschnitt des Schaftstückes **420**, welches an das Gewindestück **430** angrenzt, nicht zwingend erforderlich.
- Der Schlitz **510** im Spreizring **500** könnte auch etwa vertikal verlaufen; oder es könnten mehrere Dehnungsschlitze vorgesehen sein.
- Die Ausnehmung **411** im Kopf **410** der Klemmschraube **400** kann auch ohne die Abfasung **413** eingearbeitet sein, so dass eine exakt vierkantige, quadratische Innenkontur **412** entsteht.

## Patentansprüche

1. Verbindungsanordnung umfassend ein Dentalimplantat (**1**) und ein darauf zu fixierendes Abutment (**100**,**200**,**300**,**800**), wobei
a) das Implantat (**1**) eine Kopfpartie (**10**) und eine sich nach unten erstreckende Schaftpartie (**20**) aufweist;
b) in der Kopfpartie (**10**) eine Hauptbohrung (**12**) vorgesehen ist, die an einem Bohrungsgrund (**13**) sacklochförmig endet, von welchem sich eine axiale, abwärts weisende Gewindebohrung (**21**) mit einem Innengewinde (**22**) erstreckt;
c) die Hauptbohrung (**12**) konisch konturiert ist, wodurch sich ein aufwärts erweiternder Innenkonus (**14**) ergibt;
d) das Implantat (**1**) zuoberst mit einer Implantatschulter (**11**) endet, die sich aufwärts verjüngenden kann;
e) das Abutment (**100**,**200**,**300**,**800**) eine obere Halspartie (**110**,**210**,**310**,**810**) sowie eine untere Wurzelpartie (**120**,**220**,**320**,**820**) besitzt, und die erstgenannte aus dem Implantat (**1**) herausragt, während die letztgenannte im Innenkonus (**14**) steckt;
f) eine das Abutment (**100**,**200**,**300**,**800**) mit dem Implantat (**1**) verbindende Klemmschraube (**400**) vorgesehen ist, deren Kopf (**410**) im Abutment (**100**,**200**,**300**,**800**) sitzt, während deren Gewindestück (**430**) in die Gewindebohrung (**21**) eingreift;
g) das Abutment (**100**,**200**,**300**,**800**) einen unten an der Wurzelpartie (**120**,**220**,**320**,**820**), am Auslauf (**121**,**221**,**321**,**821**) beginnenden Einlass (**130**,**230**,**330**,**830**) aufweist;
h) bei einem geraden Abutment der Einlass (**130**,**230**,**330**,**830**) axial durchgehend ist; und
i) bei einem abgewinkelten Abutment der Einlass (**130**,**230**,**330**,**830**) abgewinkelt und durchgängig oder sacklochförmig ist, und bei einem sacklochförmigen Einlass zusätzlich eine laterale Öffnung vorhanden ist, **dadurch gekennzeichnet**, dass,
j) dem Auslauf (**121**,**221**,**321**,**821**) des Abutment (**100**,**200**,**300**,**800**) zugewandt, im Einlass (**130**,**230**,**330**,**830**) eine radial umlaufende Nut (**135**,**235**,**335**,**835**) mit einem darin aufgenommenen Spreizring (**500**) vorhanden ist;
k) durch den Spreizring (**500**) die Klemmschraube (**400**) ragt, deren Kopf (**410**) auf dem Spreizring (**500**) aufsitzt und die Klemmschraube (**400**) mit deren Kopf (**410**) voran, von seiten der Wurzelpartie (**120**,**220**,**320**,**820**), in den Einlass (**130**,**230**,**330**,**830**) einführbar ist;
l) der durchgehende Einlass (**130**,**230**,**330**,**830**) oder die laterale Öffnung als Zutritt für einen Schraubendreher zum Kopf (**410**) der Klemmschraube (**400**) dient; und
m) bei einem durchgehenden Einlass (**130**,**230**,**330**,**830**) oben ein Innengewindeabschnitt (**132**,**232**,**332**,**832**) vorhanden sein kann, welcher die Funktion hat, eine Okklusalschraube zur Fixierung der Suprakonstruktion aufzunehmen.

2. Verbindungsanordnung nach Anspruch 1, **dadurch gekennzeichnet**, dass
a) die Klemmschraube (**400**) aus dem Kopf (**410**), einem sich anschliessenden, im Durchmesser reduzierten Schaftstück (**420**) und dem unteren Gewindestück (**430**) besteht;
b) am Übergang vom Kopf (**410**) zum Schaftstück (**420**) eine schräge Auflagefläche (**413**) vorhanden ist;
c) am Schaftstück (**420**) eine radial umlaufende Nut (**421**) zur zeitweiligen Aufnahme des Spreizrings (**500**) vorgesehen ist, wodurch das Schaftstück (**420**) in drei Sektoren geteilt ist, nämlich in einen oberen und einen unteren Abschnitt über bzw. unter der Nut (**421**) sowie die Nut (**421**) selbst;
d) der Spreizring (**500**) in montierter Position auf dem Schaftstück (**420**) unterhalb des Kopfes (**410**) der Klemmschraube (**400**) sitzt; und
e) die Übergänge zwischen der Nut (**421**) und den angrenzenden Abschnitten des Schaftstücks (**420**) von Abschrägungen (**422**,**423**) gebildet sind.

3. Verbindungsanordnung nach Anspruch 1 oder 2, **dadurch gekennzeichnet**, dass die Klemmschraube (**400**) im Kopf (**410**) eine Ausnehmung (**411**) mit einer Innenkontur (**412**) für den Eingriff eines Schraubendrehers hat, dessen Schraubendreherkopf eine zur Innenkontur (**412**) komplementäre Aussenkontur besitzt.

4. Verbindungsanordnung nach Anspruch 3, **dadurch gekennzeichnet**, dass die von der Ausnehmung (**411**) gebildete Innenkontur (**412**) im Kopf (**410**) der Klemmschraube (**400**) ein sich von der Oberseite des Kopfes (**410**) axial in diesen hinein erstreckender, sacklochförmiger Vier- oder Fünfkant ist und in der Tiefe in einer weitwinkligen Kegelspitze (**416**) münden kann.

5. Verbindungsanordnung nach Anspruch 1 oder 2, **dadurch gekennzeichnet**, dass
a) der Spreizring (**500**) einen gänzlich durchgehenden, den Spreizring (**500**) öffnenden Schlitz (**510**) besitzt; und
b) an der Oberkante (**520**) des Spreizrings (**500**) eine zur, an der Klemmschraube (**400**) befindliche Auflagefläche (**413**), komplementäre Schrägfläche (**521**) vorgesehen ist.

6. Verbindungsanordnung nach Anspruch 1, **dadurch gekennzeichnet**, dass die Klemmschraube (**400**) mit aufgestecktem Spreizring (**500**) und dem Kopf (**410**) voran in den Einlass (**130**,**230**,**330**,**830**) des Abutment (**100**,**200**,**300**, **800**) einführbar ist.

7. Verbindungsanordnung nach Anspruch 1, wobei das Implantat (**1**) eine zuoberst radial umlaufende, kreisringförmige Implantatschulter (**11**) aufweist, innerhalb welcher eine axial sich erstreckende, nach oben konisch erweiternde Hauptbohrung (**12**) mündet, die einen Innenkonus (**14**) bildet und zum Einsetzen der konischen Wurzelpartie (**120**,**220**,**820**) des Abutments (**100**,**200**,**800**) bestimmt ist, **dadurch gekennzeichnet**, dass
a) am Innenkonus (**14**) eine nichtrotationssymmetrische Aufnahmekontur (**15**) vorgesehen ist;
b) die Aufnahmekontur (**15**) so gestaltet ist, dass sowohl darüber als auch darunter je ein radial ununterbrochener Abschnitt (**18**,**19**) des Innenkonus (**14**) verbleibt; wobei
c) der obere Abschnitt (**18**) eine nicht geringere Höhe als der untere Anschnitt (**19**) aufweist;
d) die Aufnahmekontur (**15**) ein Innenvielkant ist, der an der Unterseite voll ausgebildet ist und nach oben hin in Spitzen parabelförmig ausläuft; und
e) dass unterhalb der Aufnahmekontur (**15**), an diese unmittelbar angrenzend, eine radial umlaufende Nut (**17**) am Innenkonus (**14**) vorgesehen ist.

8. Abutment (**100**,**200**,**300**,**800**) zum Fixieren auf einem Dentalimplantat (**1**) wobei
a) das Abutment (**100**,**200**,**300**,**800**) gerade oder abgewinkelt ist und eine obere Halspartie (**110**,**210**,**310**,**810**) sowie eine untere Wurzelpartie (**120**,**220**,**320**,**820**) besitzt;
b) ein unten an der Wurzelpartie (**120**,**220**,**320**,**820**), am Auslauf (**121**,**221**,**321**,**821**) beginnender und durchgehender Einlass (**130**,**230**,**330**,**830**) vorhanden ist, **dadurch gekennzeichnet**, dass
c) dem Auslauf (**121**,**221**,**321**,**821**) des Abutment (**100**,**200**,**300**,**800**) zugewandt, im Einlass (**130**,**230**,**330**,**830**) eine radial umlaufende Nut (**135**,**235**,**335**,**835**) zur Aufnahme eines Spreizrings (**500**) vorhanden ist;
d) in den Einlass (**130**,**230**,**330**,**830**) eine Klemmschraube (**400**) mit dem Kopf (**410**) voran, von seiten der Wurzelpartie (**120**,**220**,**320**,**820**), einführbar ist;
e) am Ausgang der Halspartie (**110**,**210**,**310**,**810**), innerhalb des Einlasses (**130**,**230**,**330**,**830**) ein Schraubensitz (**131**,**231**,**331**) vorhanden ist; und
f) unterhalb des Schraubensitzes (**131**,**231**,**331**) in der Halspartie (**110**,**210**,**310**,**810**) ein sich erstreckender Innengewindeabschnitt (**132**,**232**,**332**,**832**) vorhanden ist, an den sich ein erweiterter Schraubenkopfabschnitt (**134**,**234**,**334**,**834**) anschliesst.

9. Abutment (**100**,**200**,**300**,**800**) nach Anspruch 8, **dadurch gekennzeichnet**, dass sich der Innengewindeabschnitt (**132**,**232**,**332**,**832**) bis zu einer Schrägfläche (**133**,**233**,**333**) erstreckt.

10. Abutment (**300**) nach Anspruch 8 oder 9**, dadurch gekennzeichnet**, dass das Abutment (**300**) am Übergang zwischen der Halspartie (**310**) und der Wurzelpartie (**320**) äusserlich eine Auskehlung (**341**) sowie einen Kragen (**342**) besitzt, der eine komplementäre Gegenschulter (**343**) bildet, welche sich im zusammengebauten Zustand auf der inneren Ringfläche der Implantatschulter (**11**) abstützt.

11. Abutment (**300**) nach Anspruch 10 und in Verwendung mit der Verbindungsanordnung gemäss Anspruch 1, **dadurch gekennzeichnet**, dass eine Zentrierhülse (**600**) in den Innenkonus (**14**) des Implantats (**1**) eingesetzt ist, die auf das Gewindestück (**430**) der Klemmschraube (**400**) aufgeschraubt ist und in sich die Wurzelpartie (**320**) mit dem Spreizring (**500**) aufnimmt.

12. Abutment (**800**) nach Anspruch 8, **dadurch gekennzeichnet**, dass
a) die Wurzelpartie (**820**) konisch ist;
b) an der Wurzelpartie (**820**) zum Zweck der Retention eine nichtrotationssymmetrische äussere Gegenkontur (**825**) vorhanden sein kann, die dazu bestimmt ist, in eine im Implantat (**1**) vorgesehene Aufnahmekontur (**15**) eingesetzt zu werden;
c) bei einem geraden Abutment (**800**) der Einlass (**830**) axial durchgehend ist;
d) bei einem abgewinkelten Abutment (**800**) der Einlass (**830**) abgewinkelt und durchgängig oder sacklochförmig ist, und bei einem sacklochförmigen Einlass zusätzlich eine laterale Öffnung vorhanden ist;
e) der durchgehende Einlass (**830**) oder die laterale Öffnung als Zutritt für einen Schraubendreher ausgelegt ist;
f) bei einem durchgehenden Einlass (**830**) oben ein Innengewindeabschnitt (**832**) vorhanden sein kann, welcher die Funktion hat, eine Okklusalschraube zur Fixierung der Suprakonstruktion aufzunehmen; und
g) die Halspartie (**810**) äusserlich zumindest eine Planfläche (**811**) aufweisen kann.

13. Abutment (**800**) nach Anspruch 12, **dadurch gekennzeichnet**, dass die Gegenkontur (**825**) als Vielkant so ausgebildet ist, dass
a) sowohl darüber als auch darunter je ein radial ununterbrochenes Segment (**828**,**829**) der Wurzelpartie (**820**) verbleibt und die Mantelflächen beider Segmente (**828**,**829**) miteinander fluchten, wobei das untere Segment (**829**) in der Höhe grösser oder kleiner ist als das obere Segment (**828**); oder
b) das untere Segment (**829**) entfällt, wodurch sich die Gegenkontur (**825**) unmittelbar bis an den Auslauf (**821**) erstreckt.

14. Zentrierhülse nach Anspruch 11, **dadurch gekennzeichnet**, dass
a) die Zentrierhülse (**600**) aus einer unteren, reifenförmigen Basispartie (**610**) und einem sich aufwärts erstreckenden, dünnwandigen Mantelfortsatz (**620**) besteht, wobei sich die Zentrierhülse (**600**), komplementär zur Form des Innenkonus (**14**), äusserlich nach oben konisch erweitert;
b) in der Basispartie (**610**) eine axiale Bohrung (**611**) mit einem zum Aussengewinde (**431**) passfähigen Innengewinde (**612**) vorhanden ist; und
c) im Mantelfortsatz (**620**) mehrere vertikale Dehnungsschlitze (**621**) eingearbeitet sind, die etwa bis auf die Höhe der Basispartie (**610**) reichen.

## Claims

1. Connection arrangement comprising a dental implant (**1**) and an abutment (**100**,**200**,**300**,**800**) to be fixed thereon, where:
a) the implant (**1**) has a head portion (**10**) and a downwardly extending shaft portion (**20**);
b) in the head portion (**10**) there is a main bore (**12**) which ends in the manner of a blind hole at the bottom (**13**) of the bore, from which there extends an axial, downwardly running threaded bore (**21**) with an internal thread (**22**);
c) the main bore (**12**) is conically contoured, as a result of which an upwardly widening inner cone (**14**) is obtained;
d) the implant (**1**) ends at the very top with an implant shoulder (**11**) which can taper upwards;
e) the abutment (**100**,**200**,**300**,**800**) has an upper neck portion (**110**,**210**,**310**,**810**) and a lower root portion (**120**,**220**,**320**,**820**), the former protruding from the implant (**1**), and the latter engaging in the inner cone (**14**);
f) a clamping screw (**400**) is provided which connects the abutment (**100**, **200**,**300**,**800**) to the implant (**1**) and whose head (**410**) sits in the abutment (**100**,**200**,**300**,**800**), while its threaded segment (**430**) engages in the threaded bore (**21**);
g) the abutment (**100**,**200**,**300**,**800**) has an inlet (**130**,**230**,**330**,**830**) beginning at the bottom of the root portion (**120**,**220**,**320**,**820**), at the end (**121**,**221**,**321**,**821**);
h) in the case of a straight abutment, the inlet (**130**,**230**,**330**,**830**) is axially continuous; and
i) in the case of an angled abutment, the inlet (**130**,**230**,**330**,**830**) is angled and either continuous or in the form of a blind hole, and, in the case of an inlet in the form of a blind hole, a lateral opening is additionally provided, characterized in that
j) a radially encircling groove (**135**,**235**,**335**,**835**) with an expanding ring (**500**) received therein is present in the inlet (**130**,**230**,**330**,**830**), in the direction towards the end (**121**,**221**,**321**,**821**) of the abutment (**100**,**200**,**300**,**800**);
k) the clamping screw (**400**) protrudes through the expanding ring (**500**), its head (**410**) sitting on the expanding ring (**500**), and the clamping screw (**400**) can be introduced, with its head (**410**) leading, into the inlet (**130**, **230**,**330**,**830**) via the root portion (**120**,**220**,**320**,**820**);
l) the continuous inlet (**130**,**230**,**330**,**830**) or the lateral opening provides a screwdriver with access to the head (**410**) of the clamping screw (**400**); and
m) in the case of a continuous inlet (**130**,**230**,**330**,**830**), an internally threaded section (**132**,**232**,**332**,**832**) can be present at the top and has the function of receiving an occlusal screw for fixing the superstructure.

2. Connection arrangement according to Claim 1, characterized in that
a) the clamping screw (**400**) consists of the head (**410**), of an adjoining shank segment (**420**) of reduced diameter, and of the lower threaded segment (**430**);
b) a bevelled bearing surface (**413**) is present at the transition from the head (**410**) to the shank segment (**420**);
c) a radially encircling groove (**421**) for temporarily receiving the expanding ring (**500**) is provided on the shank segment (**420**), as a result of which the shank segment (**420**) is divided into three sectors, namely an upper section and a lower section above and below the groove (**421**) respectively, and the groove (**421**) itself;
d) the expanding ring (**500**), in the mounted position on the shank segment (**420**), sits underneath the head (**410**) of the clamping screw (**400**); and
e) the transitions between the groove (**421**) and the adjoining sections of the shank segment (**420**) are formed by bevels (**422**,**423**).

3. Connection arrangement according to Claim 1 or 2, characterized in that the clamping screw (**400**) has in the head (**410**) a recess (**411**) with an inner contour (**412**) for engagement of a screwdriver, whose screwdriver head has an outer contour complementary to the inner contour (**412**).

4. Connection arrangement according to Claim 3, characterized in that the inner contour (**412**) formed by the recess (**411**) in the head (**410**) of the clamping screw (**400**) is a four-edged or five-edged contour which is in the form of a blind hole and which extends from the top side of the head (**410**) axially into the latter and can open out at the bottom in a wide-angled cone tip (**416**).

5. Connection arrangement according to Claim 1 or 2, characterized in that
a) the expanding ring (**500**) has a fully continuous slot (**510**) forming an opening in the expanding ring (**500**); and
b) on the top edge (**520**) of the expanding ring (**500**), a bevelled surface (**521**) is provided which is complementary to the bearing surface (**413**) present on the clamping screw (**400**).

6. Connection arrangement according to Claim 1, characterized in that the clamping screw (**400**) can be introduced, with the expanding ring (**500**) applied, and with the head (**410**) leading, into the inlet (**130**,**230**,**330**,**830**) of the abutment (**100**,**200**,**300**,**800**).

7. Connection arrangement according to Claim 1, wherein the implant (**1**) has at the very top, a radially encircling, annular implant shoulder (**11**) inside which an axially extending main bore (**12**) opens out, which main bore (**12**) widens conically towards the top, forms an inner cone (**14**) and is intended for the insertion of the conical root portion (**120**,**220**,**820**) of the abutment (**100**,**200**,**800**), characterized in that
a) a non-rotationally symmetrical receiving contour (**15**) is provided on the inner cone (**14**);
b) the receiving contour (**15**) is designed such that a radially uninterrupted section (**18**,**19**) of the inner cone (**14**) remains both above it and below it; wherein
c) the upper section (**18**) does not have a smaller height than the lower section (**19**);
d) the receiving contour is an inner polygon which is of solid design on the underside and runs out in parabolic points towards the top; and
e) below the receiving countour (**15**), and directly adjoining the latter, there is a radially encircling groove (**17**) on the inner cone (**14**).

8. Abutment (**100**,**200**,**300**,**800**) for fixing on a dental implant (**1**), where:
a) the abutment (**100**,**200**,**300**,**800**) is straight or angled and has an upper neck portion (**110**,**210**,**310**,**810**) and a lower root portion (**120**,**220**,**320**, **820**);
b) a continuous inlet (**130**,**230**,**330**,**830**) is provided, beginning at the bottom of the root portion (**120**,**220**,**320**,**820**), at the end (**121**,**221**,**321**,**821**), characterized in that
c) a radially encircling groove (**135**,**235**,**335**,**835**) for receiving an expanding ring (**500**) is present in the inlet (**130**,**230**,**330**,**830**), in the direction towards the end (**121**,**221**,**321**,**821**) of the abutment (**100**,**200**,**300**,**800**);
d) a clamping screw (**400**) can be introduced, with its head (**410**) leading, into the inlet (**130**,**230**,**330**,**830**) via the root portion (**120**,**220**,**320**,**820**);
e) a screw seat (**131**,**231**,**331**) is present at the end of the neck portion (**110**,**210**,**310**,**810**) inside the inlet (**130**,**230**,**330**,**830**); and
f) below the screw seat (**131**,**231**,**331**) in the neck portion (**110**,**210**,**310**,**810**) there is an internally threaded section (**132**,**232**,**332**,**832**) which is adjoined by a widened screwhead section (**134**,**234**,**334**,**834**).

9. Abutment (**100**,**200**,**300**,**800**) according to Claim 8, characterized in that the internally threaded section (**132**,**232**,**332**,**832**) extends as far as a bevelled surface (**133**,**233**,**333**).

10. Abutment (**300**) according to Claim 8 or 9, characterized in that the abutment (**300**) has externally, at the transition between the neck portion (**310**) and the root portion (**320**), a recess (**341**) and a collar (**342**) which forms a complementary counter-shoulder (**343**) which, in the assembled state, rests on the inner annular surface of the implant shoulder (**11**).

11. Abutment (**300**) according to Claim 10 and when using the connection arrangement according to Claim 1, characterized in that a centring sleeve (**600**) is fitted into the inner cone (**14**) of the implant (**1**) and is screwed onto the threaded segment (**430**) of the clamping screw (**400**) and receives within itself the root portion (**320**) with the expanding ring (**500**).

12. Abutment (**800**) according to Claim 8, characterized in that
a) the root portion (**820**) is conical;
b) for retention purposes, a non-rotationally symmetrical, outer counter-contour (**825**) can be provided on the root portion (**820**), which is intended to be inserted in a receiving contour (**15**) provided in the implant (**1**);
c) in the case of a straight abutment (**800**), the inlet (**830**) is axially continuous;
d) in the case of an angled abutment (**800**), the inlet (**830**) is angled and either continuous or in the form of a blind hole, and, in the case of an inlet in the form of a blind hole, a lateral opening is additionally provided;
e) the continuous inlet (**830**) or the lateral opening provides access for a screwdriver;
f) in the case of a continuous inlet (**830**), an internally threaded section (**832**) can be present at the top and has the function of receiving an occlusal screw for fixing the superstructure; and
g) the neck portion (**810**) can have on the outside at least one plane surface (**811**).

13. Abutment (**800**) according to Claim 12, characterized in that the counter-contour (**825**) is designed as a polygon such that:
a) a radially uninterrupted segment (**828**,**829**) of the root portion (**820**) remains both above it and below it, and the circumferential surfaces of both segments (**828**,**829**) are flush with one another, the lower segment (**829**) being greater or smaller in height than the upper segment (**828**); or
b) the lower segment (**829**) is dispensed with, as a result of which the countercontour (**825**) extends directly to the end (**821**).

14. Centring sleeve according to Claim 11, characterized in that
a) the centring sleeve (**600**) consists of a lower, tyre-shaped base portion (**610**) and of an upwardly extending, thin-walled circumferential continuation (**620**), the centring sleeve (**600**) externally widening conically towards the top, complementary to the shape of the inner cone (**14**);
b) in the base portion (**610**) there is an axial bore (**611**) with an internal thread (**612**) which can fit the external thread (**431**); and
c) a plurality of vertical expansion slots (**621**) are formed in the circumferential continuation (**620**) and reach approximately to the level of the base portion (**610**).

## Revendications

1. Dispositif de connexion comprenant un implant dentaire (1) et un embout (100, 200, 300, 800) à fixer sur celui-ci, dans lequel
a) l'implant (1) présente une partie de tête (10) et une partie de tige (20) s'étendant sous celle-ci;
b) dans la partie de tête (10) est prévu un alésage principal (12), qui se termine en forme de trou borgne par une base d'alésage (13), depuis laquelle s'étend un alésage fileté axial (21), tourné vers le bas, avec un filetage interne (22);
c) l'alésage principal (12) a un contour conique, qui donne un cône interne (14) s'élargissant vers le haut;
d) l'implant (1) se termine, dans sa partie supérieure, par un épaulement d'implant (11), qui peut se rétrécir vers le haut;
e) l'embout (100, 200, 300, 800) possède une partie de gorge supérieure (110, 210, 310, 810) ainsi qu'une partie de racine inférieure (120, 220, 320, 820), et la première mentionnée fait saillie hors de l'implant (1), tandis que la deuxième mentionnée s'enfonce dans le cône interne (14);
f) il est prévu une vis de serrage (400) reliant l'embout (100, 200, 300, 800) à l'implant (1), dont la tête (410) repose dans l'embout (100, 200, 300, 800), tandis que sa partie filetée (430) vient s'engager dans l'alésage fileté (21);
g) l'embout (100, 200, 300, 800) présente une entrée (130, 230, 330, 830) commençant en bas au niveau de la partie de racine (120, 220, 320, 820), à la sortie (121, 221, 321, 821);
h) dans le cas d'un embout droit, l'entrée (130, 230, 330, 830) est continue axialement; et
i) dans le cas d'un embout coudé, l'entrée (130, 230, 330, 830) est coudée et continue ou en forme de trou borgne, et dans le cas d'une entrée en forme de trou borgne, une ouverture latérale est prévue, caractérisé en ce que
j) une rainure radialement périphérique (135, 235, 335, 835) est prévue dans l'entrée (130, 230, 330, 830), tournée vers la sortie (121, 221, 321, 821) de l'embout (100, 200, 300, 800), avec un anneau d'écartement (500) reçu dans celle-ci;
k) la vis de serrage (400) fait saillie à travers l'anneau d'écartement (500), sa tête (410) reposant sur l'anneau d'écartement (500) et la vis de serrage (400) avec sa tête (410) en avant, est insérable du côté de la partie de racine (120, 220, 320, 820), dans l'entrée (130, 230, 330, 830);
l) l'entrée continue (130, 230, 330, 830) ou l'ouverture latérale sert d'entrée pour un tournevis pour la tête (410) de la vis de serrage (400); et
m) dans le cas d'une entrée continue (130, 230, 330, 830) une portion de filetage interne (132, 232, 332, 832) peut être prévue en haut, ayant la fonction d'accepter une vis d'occlusion pour fixer la construction supérieure.

2. Dispositif de connexion selon la revendication 1, caractérisé en ce que
a) la vis de serrage (400) se compose de la tête (410), d'une partie de tige (420) de diamètre réduit s'y raccordant, et de la partie filetée inférieure (430);
b) il est prévu une surface d'appui (413) oblique au niveau de la transition entre la tête (410) et la partie de tige (420);
c) une rainure périphérique radiale (421) est prévue au niveau de la partie de tige (420) pour recevoir temporairement l'anneau d'écartement (500), la partie de tige (420) étant divisée en trois secteurs, a savoir en une portion supérieure et une portion inférieure au-dessus, respectivement en dessous de la rainure (421) ainsi qu'en la rainure (421) elle-même;
d) l'anneau d'écartement (500) repose, dans sa position montée sur la partie de tige (420) en dessous de la tête (410) de la vis de serrage (400); et
e) les transitions entre la rainure (421) et les portions adjacentes de la partie de tige (420) sont formées par des biseautages (422, 423).

3. Dispositif de connexion selon la revendication 1 ou 2, caractérisé en ce que la vis de serrage (400) présente dans sa tête (410) un évidement (411) avec un contour intérieur (412) destiné à venir en prise avec un tournevis, dont la tête de tournevis possède un contour externe complémentaire du contour interne (412).

4. Dispositif de connexion selon la revendication 3, caractérisé en ce que le contour interne (412) formé par l'évidement (411) dans la tête (410) de la vis de serrage (400) est un quatre-pans ou un cinq-pans en forme de trou borgne s'étendant depuis la surface supérieure de la tête (410) axialement à l'intérieur de celle-ci, et peut déboucher en profondeur dans une pointe conique (416) à grand angle.

5. Dispositif de connexion selon la revendication 1 ou 2, caractérisé en ce que
a) l'anneau d'écartement (500) possède une fente (510) ouvrant l'anneau d'écartement (500), entièrement continue; et
b) au niveau de l'arête supérieure (520) de l'anneau d'écartement (500), il est prévu une surface oblique (521), complémentaire de la surface d'appui (413) se trouvant au niveau de la vis de serrage (400).

6. Dispositif de connexion selon la revendication 1, caractérisé en ce que la vis de serrage (400), avec l'anneau d'écartement monté (500) et la tête (410) en avant, est insérable dans l'entrée (130, 230, 330, 830) de l'embout (100, 200, 300, 800).

7. Dispositif de connexion selon la revendication 1, dans lequel l'implant (1) présente un épaulement d'implant (11) de forme annulaire, radialement périphérique, dans la partie supérieure, à l'intérieur duquel débouche un alésage principal (12) s'étendant axialement, s'élargissant en cône vers le haut, qui forme un cône interne (14) et est prévu pour l'insertion de la partie de racine conique (120, 220, 820) de l'embout (100, 200, 800), caractérisé en ce que
a) au niveau du cône interne (14), il est prévu un contour de positionnement (15) n'ayant pas de symétrie de révolution;
b) le contour de positionnement (15) est configuré de telle sorte qu'il reste, tant au dessus qu'en dessous, à chaque fois une portion ininterrompue radialement (18, 19) du cône interne (14);
c) la portion supérieure (18) présentant une hauteur non inférieure à la portion inférieure (19);
d) le contour de positionnement (15) est un polyèdre interne, qui est formé complètement à la partie inférieure, et ressort vers le haut en pointes de forme parabolique; et
e) sous le contour de positionnement (15), immédiatement adjacente à celui-ci, se trouve une rainure (17) radialement périphérique, sur le cône interne (14).

8. Embout (100, 200, 300, 800) à fixer sur un implant dentaire (1), dans lequel
a) l'embout (100, 200, 300, 800) est droit ou coudé, et possède une partie de gorge supérieure (110, 210, 310, 810) ainsi qu'une partie de racine inférieure (120, 220, 320, 820);
b) il est prévu en bas, sur la partie de racine (120, 220, 320, 820) , une entrée (130, 230, 330, 830) continue et commençant à la sortie (121, 221, 321, 821), caractérisé en ce que
c) une rainure radialement périphérique (135, 235, 335, 835) est prévue dans l'entrée (130, 230, 330, 830), tournée vers la sortie (121, 221, 321, 821) de l'embout (100, 200, 300, 800), pour recevoir un anneau d'écartement (500);
d) une vis de serrage (400) avec la tête (410) vers l'avant est insérable dans l'entrée (130, 230, 330, 830), du côté de la partie de racine (120, 220, 320, 820);
e) un siège de vis (131, 231, 331) est prévu à la sortie de la partie de gorge (110, 210, 310, 810), a l'intérieur de l'entrée (130, 230, 330, 830); et
f) une portion de filetage interne (132, 232, 332, 832) étendue est prévue dans la partie de gorge (110, 210, 310, 810) sous le siège de vis (131, 231, 331), une portion de tête de vis (134, 234, 334, 834) élargie se raccordant à celle-ci.

9. Embout (100, 200, 300, 800) selon la revendication 8, caractérisé en ce que la portion de filetage interne (132, 232, 332, 832) s'étend jusqu'à une surface oblique (133, 233, 333).

10. Embout (300) selon la revendication 8 ou 9, caractérisé en ce que l'embout (300) possède, au niveau de la transition entre la partie de gorge (310) et la partie de racine (320), à l'extérieur, une cannelure (341) ainsi qu'un col (342), qui forme un contre-épaulement complémentaire (343), qui s'appuie, dans l'état assemblé, sur la surface annulaire interne de l'épaulement (11) de l'implant.

11. Embout (300) selon la revendication 10 et conjointement avec le dispositif de connexion selon la revendication 1, caractérisé en ce qu'une gaine de centrage (600) est insérée dans le cône interne (14) de l'implant (1), laquelle est vissée par-dessus la partie filetée (430) de la vis de serrage (400), et reçoit en elle la partie de racine (320) avec l'anneau d'écartement (500).

12. Embout (800) selon la revendication 8, caractérisé en ce que
a) la partie de racine (820) est conique;
b) un contre-contour extérieur (825) sans symétrie de révolution peut être prévu dans la partie de racine (820) à des fins de retenue, lequel est prévu pour être inséré dans un contour de positionnement (15) prévu dans l'implant (1);
c) dans le cas d'un embout droit (800) l'entrée (830) est continue axialement;
d) dans le cas d'un embout coudé (800), l'entrée (830) est coudée et continue ou en forme de trou borgne, et dans le cas d'une entrée en forme de trou borgne, une ouverture latérale supplémentaire est prévue;
e) l'entrée continue (830) ou l'ouverture latérale est conçue comme entrée pour un tournevis;
f) dans le cas d'une entrée continue (830), une portion de filetage interne (832) peut être prévue en haut, laquelle a pour fonction de recevoir une vis d'occlusion pour fixer la construction supérieure; et
g) la partie de gorge (810) peut présenter à l'extérieur au moins une surface plane (811).

13. Embout (800) selon la revendication 12, caractérisé en ce que le contre-contour (825) est conçu en tant que polyèdre, de telle sorte
a) qu'il reste, tant au dessus qu'en dessous, a chaque fois un segment ininterrompu radialement (828, 829) de la partie de racine (820), et les surfaces d'enveloppe des deux segments (828, 829) sont alignées en affleurement l'une avec l'autre, le segment inférieur (829) ayant une hauteur supérieure ou inférieure au segment supérieur (828); ou
b) le segment inférieur (829) est omis, auquel cas le contre-contour (825) s'étend directement jusqu'à la sortie (821).

14. Gaine de centrage selon la revendication 11, caractérisée en ce que
a) la gaine de centrage (600) se compose d'une partie de base (610) inférieure en forme d'anneau, et d'une saillie d'enveloppe (620) à parois minces, s'étendant vers le haut, la gaine de centrage (600) s'élargissant à l'extérieur de manière conique vers le haut de manière complémentaire de la forme du cône interne (14);
b) un alésage axial (611) étant prévu dans la partie de base (610) avec un filetage interne (612) adaptable au filetage extérieur (431); et
c) dans la saillie d'enveloppe (620) sont incorporées plusieurs fentes verticales d'allongement (621), qui s'étendent pratiquement jusqu'à la hauteur de la partie de base (610).
